(19) **Europäisches Patentamt / European Patent Office / Office européen des brevets**

(11) **EP 1 692 578 B1**

(12) **EUROPÄISCHE PATENTSCHRIFT**

(45) Veröffentlichungstag und Bekanntmachung des Hinweises auf die Patenterteilung:
**30.04.2008 Patentblatt 2008/18**

(21) Anmeldenummer: **04803758.4**

(22) Anmeldetag: **10.12.2004**

(51) Int Cl.:
**G05B 19/05** (2006.01)

(86) Internationale Anmeldenummer:
**PCT/EP2004/014116**

(87) Internationale Veröffentlichungsnummer:
**WO 2005/057306 (23.06.2005 Gazette 2005/25)**

(54) **PERIPHERIEEINHEIT FÜR EIN REDUNDANTES STEUERSYSTEM**

PERIPHERAL UNIT FOR A REDUNDANT CONTROL SYSTEM

UNITE PERIPHERIQUE D'UN SYSTEME DE COMMANDE REDONDANT

(84) Benannte Vertragsstaaten:
**DE ES FR GB IT**

(30) Priorität: **10.12.2003 DE 10357797**

(43) Veröffentlichungstag der Anmeldung:
**23.08.2006 Patentblatt 2006/34**

(73) Patentinhaber: **SIEMENS AKTIENGESELLSCHAFT**
**80333 München (DE)**

(72) Erfinder:
• **KREB, Walter**
  **76848 Schwanheim (DE)**
• **LEHMANN, Ulrich**
  **76744 Wörth (DE)**
• **SCHWAB, Robert**
  **76187 Karlsruhe (DE)**

(56) Entgegenhaltungen:
**EP-A- 0 618 518        EP-A- 0 647 890**
**EP-A- 1 128 241        DE-A1- 4 312 305**

EP 1 692 578 B1

**Beschreibung**

Die Erfindung betrifft eine Peripherieeinheit für ein redundantes Steuersystem, welches einen ersten und einen zweiten Steuerrechner aufweist, wobei der Peripherieeinheit Steuerdaten von einem der Steuerrechner zuführbar sind, welche einen Soll-Ausgangsstrom zum Ansteuern einer induktiven Last repräsentieren, wobei durch die Peripherieeinheit der induktiven Last über einen Ausgang der Peripherieeinheit und über eine Leitung ein Ist-Ausgangsstrom zuführbar ist. Darüber hinaus betrifft die Erfindung ein redundantes Steuersystem.

Aus dem Siemens-Katalog ST 70, Kapitel 1 und 5, Ausgabe 2003 sind das hochverfügbare Automatisierungssystem SIMATIC S7-400H mit redundant ausgelegtem Aufbau sowie die Anschaltung IM153-2, die zum Anschluss einer Peripherieeinheit ET 200M als Slave in redundanten PROFIBUS-DP-Systemen mit dem Automatisierungssystem SIMATIC S7-400H einsetzbar ist, bekannt.

In vielen Bereichen der Automatisierungstechnik werden immer höhere Anforderungen an die Verfügbarkeit und damit an die Ausfallsicherheit der Automatisierungssysteme gestellt. Es sind Bereiche, in denen ein Anlagenstillstand sehr hohe Kosten verursachen würde. Hier können nur redundante Systeme den Anforderungen an die Verfügbarkeit gerecht werden. Beispielsweise die hochverfügbare SIMATIC S7-400H arbeitet auch dann weiter, wenn durch einen oder mehrere Fehler Teile der Steuerung ausgefallen sind. Sie besitzt redundant ausgelegte zentrale Funktionen und ist mit zwei getrennten Zentralgeräten als Steuerrechner aufgebaut. Die beiden Steuerrechner arbeiten zyklisch und synchron die gleichen Verarbeitungsprogramme ab. Sie überwachen sich gegenseitig und legen selbständig fest, welcher Steuerrechner aktiv ist, d. h. tatsächlich über seine Ausgabedaten den Prozess steuert. Hierzu werden Daten über eine Redundanzkopplung zwischen den beiden Steuerrechnern ausgetauscht. Redundant ausgebildete dezentrale Peripherieeinheiten ET 200M, in welche je nach Einsatzfall digitale Ein-/Ausgabebaugruppen gesteckt sind, sind jeweils mit einem Feldbus PROFIBUS-DP an die einen Steuerrechner angeschlossen. Mit Hilfe von Messumformern oder -gebern gewonnene Prozesseingangsinformationen werden durch die Peripherieeinheit an beide Steuerrechner weitergeleitet. Beim so genannten "Hot Stand By"-Betrieb arbeiten die beiden Steuerrechner im ungestörten Fall gleichzeitig dasselbe Steuerprogramm ab, es ist jedoch nur ein Steuerrechner aktiv, d. h., nur die Ausgabedaten eines Steuerrechners werden zur Steuerung des Prozesses weiterverarbeitet. Im Fehlerfall übernimmt das intakte Gerät allein die Steuerung des Prozesses. Dazu erhalten die Geräte automatisch das gleiche Anwenderprogramm, die gleichen Datenbausteine, die gleichen Prozessabbildinhalte sowie die gleichen internen Daten, wie z. B. Zeiten, Zähler, Merker usw. Dadurch sind beide Geräte immer auf dem aktuellen Stand und können im Fehlerfall jederzeit die Steuerung alleine weiterführen. Prozessausgabedaten, durch welche die an die Stellglieder von der Peripherieeinheit auszugebenden Signale vorgegeben werden, werden der Peripherieeinheit im ungestörten Fall über beide Feldbusse angeboten, sie wertet jedoch nur die von einem der Feldbusse empfangenen Steuerdaten aus. Der jeweils angeschlossene Steuerrechner kann somit als der aktive Steuerrechner bezeichnet werden. Um z. B. einen reibungslosen Betrieb einer an die Analogausgänge der Peripherieeinheiten angeschlossenen Turbine zu gewährleisten, ist es erforderlich, eine Störung an diesen Analogausgängen schnell zu erfassen und anzuzeigen, wodurch eine Umschaltung auf die ungestörte Peripherieeinheit rasch möglich ist, welche die Ansteuerung der Turbine übernimmt.

Der Erfindung liegt die Aufgabe zugrunde, eine Peripherieeinheit für ein redundantes Steuersystem zu schaffen, welche Störungen an ihren Ausgängen möglichst schnell erkennt. Darüber hinaus ist ein redundantes Steuersystem anzugeben, durch welches eine induktive Last im Wesentlichen störungsfrei ansteuerbar ist.

Diese Aufgabe wird im Hinblick auf die Peripherieeinheit durch die im kennzeichnenden Teil des Anspruchs 1 angegebenen Maßnahmen, im Hinblick auf das redundante Steuersystem durch die im Anspruch 3 angegebenen Maßnahmen gelöst.

Dadurch, dass der Ist-Ausgangsstrom erfasst und dieser mit dem Soll-Ausgangsstrom verglichen wird, kann aufgrund der Auswertung des Vergleichsergebnisses ein Kurzschluss am Peripherieausgang erkannt werden.

Darüber hinaus kann dadurch, dass ferner die Änderungsgeschwindigkeit des Ist-Ausgangsstroms erfasst und mit der Änderungsgeschwindigkeit des Soll-Ausgangsstroms verglichen wird, eine Unterbrechung der Leitung zwischen Peripherieausgang und Aktor und damit ein Totalausfall des Aktors schnell erkannt werden. Der Ist-Ausgangsstrom bricht in einem derartigen Fall schlagartig zusammen, ohne dass sich der Sollwert geändert hat. Dabei wird berücksichtigt, dass die induktive Last eine sehr hohe Induktivität aufweist und dadurch eine Stromänderung bei vorgegebener Induktivität und Versorgungsspannung des Analogausgangs erst verzögert nach einigen Millisekunden wirksam wird.

Die Verfügbarkeit des redundanten Steuersystems wird erhöht, da eine Störung am Ausgang der Peripherieeinheit schnell erkannt und gemeldet wird, wodurch eine rasche Umschaltung auf einen redundanten Zweig des Steuersystems, bestehend aus Steuerrechner und Peripherieeinheit, erfolgen kann. Das Zeitintervall wird z. B. derart vorgegeben, dass ein kurzzeitiger Einbruch (t < 20 Millisekunden) des Ausgangsstroms erfasst wird und eine Umschaltung erfolgt. Insbesondere für den Fall, dass eine Turbine angesteuert wird, ist bei einer Störung eines Ausgangs der Peripherieeinheit eine schnelle Erfassung und Umschaltung erforderlich; denn ein Einbruch des Ansteuerstroms für einen Zeitraum von ca. 20 Millisekunden bewirkt bereits einen Leistungseinbruch von mehreren Megawatt. Der Grenzwert wird z. B. derart vorgegeben, dass bereits kleine durch Hardwarestörungen bewirkte Abweichungen erkannt werden.

In einer Ausgestaltung der Erfindung ist eine Stromspiegelschaltung vorgesehen, wodurch eine einfache Erfassung des Ist-Ausgangsstromes möglich ist.

Anhand der Zeichnung, in der ein Ausführungsbeispiel der Erfindung veranschaulicht ist, werden im Folgenden die Erfindung, deren Ausgestaltungen sowie Vorteile näher erläutert.

Es zeigen:

Figur 1 eine redundante Ansteuerung von Aktoren,
Figur 2 einen Funktionsplan eines Auswertealgorithmus und
Figur 3 ein redundantes Steuersystem.

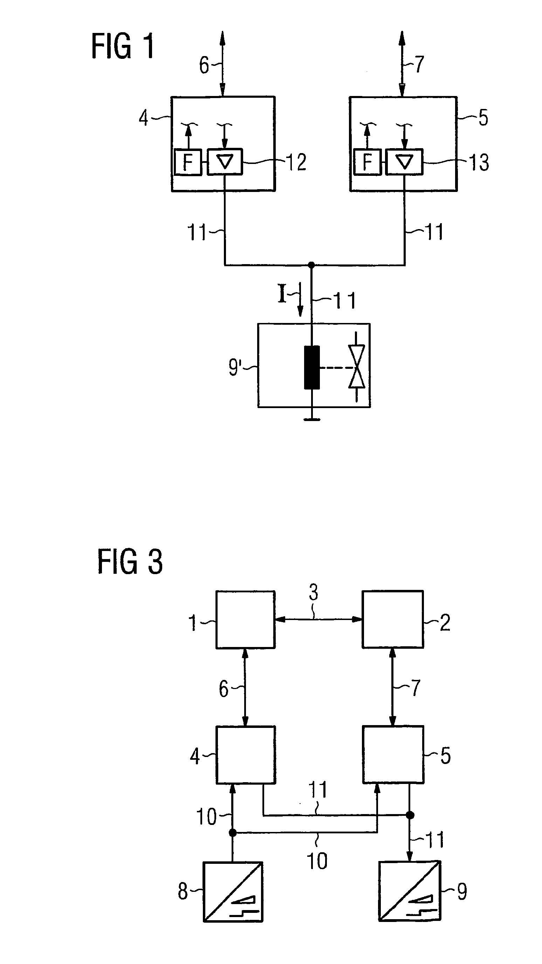

Es wird zunächst auf Figur 3 verwiesen, in welcher ein an sich bekanntes redundantes Steuersystem dargestellt ist. Das redundante Steuersystem ist gemäß einem 1von2-Prinzip aufgebaut und umfasst eine erste Redundanzeinheit mit einem ersten Steuerrechner 1 und einer ersten Peripherieeinheit 4 und eine zweite Redundanzeinheit mit einem zweiten Steuerrechner 2 sowie einer Peripherieeinheit 5. Sensoren 8 erfassen Prozesssignale eines zu steuernden technischen Prozesses, welche von den Peripherieeinheiten 4, 5 über Leitungen 10 eingelesen und über geeignete serielle oder parallele Busse 6, 7 den Steuerrechnern 1, 2 in Form von digitalen Signalen übermittelt werden. Die Steuerrechner 1, 2 verarbeiten diese Signale zu entsprechenden Steuersignalen für Aktoren 9, wobei nur eine der Redundanzeinheiten diese Steuersignale den Aktoren 9 über eine Leitung 11 übermittelt. Die Redundanzeinheiten arbeiten nach einem Master-Reserve-Betrieb, was bedeutet, dass nur eine Redundanzeinheit aktiv ist, die andere dagegen passiv geschaltet ist. Nur die aktive Redundanzeinheit steuert die Aktoren 9 über ihre Peripherieeinheit an, die andere Redundanzeinheit übermittelt ihrer Peripherieeinheit lediglich ein Nullsignal. Zum Austausch von Informationen, z. B. in Form von Status- und Abgleichinformationen, ist eine Redundanzkopplung 3 vorgesehen, über welche die Redundanzeinheiten miteinander verbunden sind. Für den Fall, dass die aktive Redundanzeinheit nicht störungsfrei arbeitet, zeigt die aktive Redundanzeinheit über die Redundanzkopplung 3 der passiven Redundanzeinheit die Störung an, wodurch die gerade passive Redundanzeinheit in die aktive Betriebsart wechselt, d. h. diese Redundanzeinheit wird aktiv geschaltet und übernimmt den Master-Betrieb, dagegen wird die gerade aktive Redundanzeinheit passiv geschaltet und wechselt in den Reserve-Betrieb. Ein Wechsel der Masterschaft muss in der Art und Weise erfolgen, dass den Aktoren die Steuersignale im Wesentlichen kontinuierlich und möglichst ohne Signaleinbrüche übermittelt werden.

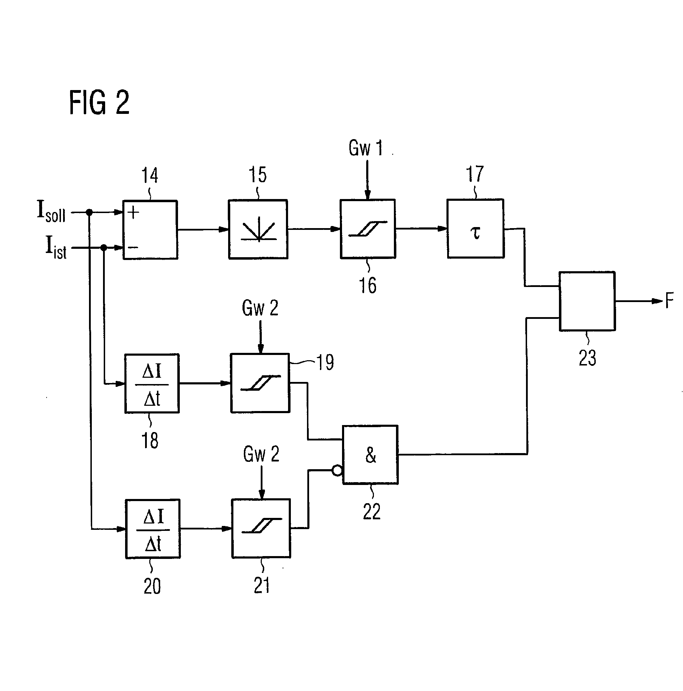

In diesem Zusammenhang wird auf Figur 1 verwiesen, in welcher eine redundante Ansteuerung eines Aktors in Form einer induktiven Last dargestellt ist. Die in den Figuren 1 und 2 dargestellten gleichen Teile sind mit gleichen Bezugzeichen versehen. Die redundant aufgebauten Peripherieeinheiten 4, 5 weisen parallel geschaltete Analogausgänge 12, 13 auf, wobei in Abhängigkeit davon, welche Redundanzeinheit im Master-Betrieb arbeitet, entweder der Ausgang 12 der Peripherieeinheit 4 oder der Ausgang 13 der Peripherieeinheit 5 einen Strom I einem Aktor 9' zuführt. Für den Fall, dass die Redundanzeinheit, welcher die Peripherieeinheit 4 zugeordnet ist, aktiv ist, führt die Peripherieeinheit 4 über ihren Ausgang 12 dem Aktor 9' den Strom I zu. Die Redundanzeinheit, welche die Peripherieeinheit 5 umfasst, ist in diesem Fall dagegen passiv, wodurch die Peripherieeinheit 5 dem Aktor 9' keinen Strom zuführt. Entsprechend ist die Peripherieeinheit 4 passiv geschaltet, falls die Peripherieeinheit 5 dem Aktor 9' den Strom I übermittelt.

Damit die Peripherieeinheiten 4, 5 Störungen an ihren Ausgängen möglichst schnell erkennen, sind die Peripherieeinheiten 4, 5 mit Mitteln versehen, welche jeweils den Ausgangsstrom ihrer Analogausgänge 12, 13 überwachen und Störungen den Steuerrechnern anzeigen. Dazu weist jede Peripherieeinheit 4, 5 eine Stromspiegelschaltung auf, welche ihren tatsächlichen Ausgangsstrom zunächst erfasst, dann digitalisiert und schließlich den digitalisierten Ist-Ausgangsstrom einem Auswertealgorithmus übermittelt. Der Auswertealgorithmus vergleicht diesen Ist-Ausgangsstrom mit einem der Peripherieeinheit durch den Steuerrechner vorgegebenen Soll-Ausgangsstrom, wobei der Auswertealgorithmus dem Steuerrechner eine Störung anzeigt, falls

- für ein vorgebbares Zeitintervall die Differenz zwischen dem Ist-Ausgangsstrom und dem Soll-Ausgangsstrom größer ist als ein vorgebbarer Grenzwert (Überwachung auf Kurzschluss) und/oder
- die Änderungsgeschwindigkeit des Ist-Ausgangsstroms im Wesentlichen nicht zeitgleich ist mit der Änderungsgeschwindigkeit des Soll-Ausgangsstroms (Überwachung auf Drahtbruch).

In diesem Zusammenhang wird auf Figur 2 verwiesen, in der ein Funktionsplan eines Auswertealgorithmus einer Peripherieeinheit dargestellt ist. Ein Differenzbildner 14 ermittelt die Differenz aus einem Ist-Ausgangsstrom $I_{ist}$ und einem Soll-Ausgangsstrom $I_{soll}$, wobei der durch einen Betragsbildner 15 ermittelte Betrag dieser Differenz mit einem vorgebbaren Grenzwert Gw1 eines Grenzwerteinstellers 16 über ein vorgebbares Zeitintervall $\tau$ eines Verzögerungsgliedes 17 verglichen wird. Für den Fall, dass für dieses vorgebbare Zeitintervall $\tau$ die Differenz kleiner ist als der vorgebbare Grenzwert Gw1, wird ein Fehlersignal F über ein UND- oder ODER-Verknüpfungsglied 23 erzeugt, welches einem Steuerrechner eine Störung eines Analogausgangs einer Peripherieeinheit anzeigt. Damit bereits durch geringe Hardwarestörungen bewirkte Abweichungen erkannt werden können, wird der Grenzwert Gw1 sehr klein eingestellt. Auch für den Fall, dass die Änderungsgeschwindigkeit ($\Delta I_{ist}/\Delta t$) des Ist-Ausgangsstroms $I_{ist}$ im Wesentlichen nicht zeitgleich erfolgt mit der Änderungsgeschwindigkeit ($\Delta I_{soll}/\Delta t$) des Soll-Ausgangsstroms $I_{soll}$, wird ein Fehler F dem Steuerrechner angezeigt, wobei diese Fehleranzeige darauf hinweist, dass ein Totalausfall der Hardware des Analogausgangs der Peripherieeinheit vorliegt. Dieser Ausfall kann z. B. durch einen Bruch der Leitung 11 zwischen der Peripherieeinheit 4, 5 und dem Aktor 9' (Figur 1) verursacht worden sein. Die Änderungsgeschwindigkeit des Ist-Ausgangsstroms $I_{ist}$ und des Soll-Ausgangsstroms $I_{soll}$ erfassen Elemente 18, 19, wobei ein Fehlersignal F über das UNDoder ODER-Verknüpfungsglied 23 dann ausgelöst wird, falls ein UND-Glied 22 detektiert, dass einerseits die Änderungsgeschwindigkeit des Ist-Ausgangsstroms $I_{ist}$ negativ ist, diese einen vorgebbaren Grenzwert Gw2 eines Grenzwertstellers 19 unterschreitet und andererseits im Wesentlichen zeitgleich mit der Änderung des Ist-Ausgangsstroms $I_{ist}$ keine Änderung des Soll-Ausgangsstroms $I_{soll}$ bewirkt wurde. Dabei wird von der Erkenntnis ausgegangen, dass der Aktor 9' als elektromagnetisches System eine sehr hohe Induktivität L aufweist. Hierdurch wird eine Stromänderung $\Delta I$ bei vorgegebener Induktivität und Versorgungsspannung U des Analogausgangs erst verzögert nach einigen Millisekunden wirksam, wobei gilt

$$\Delta t = L * \frac{\Delta I}{U} .$$

Damit "unberechtigte" Fehlermeldungen vermieden werden, wird eine Abweichung von Soll- und Ist-Ausgangsstrom nicht ungefiltert an den Steuerrechner weitergegeben, sondern wird zunächst über mehrere Zeitstufen gefiltert. Erst wenn eine Abweichung länger als die Zeit $\Delta t$ ansteht, wird eine Fehlermeldung ausgelöst und eine Umschaltung bewirkt.

**Patentansprüche**

1. Peripherieeinheit für ein redundantes Steuersystem, welches einen ersten und einen zweiten Steuerrechner (1, 2) aufweist, wobei der Peripherieeinheit (4, 5) Steuerdaten von einem der Steuerrechner (1, 2) zuführbar sind, welche einen Soll-Ausgangsstrom ($I_{soll}$) zum Ansteuern einer induktiven Last repräsentieren, wobei durch die Peripherieeinheit (4, 5) der induktiven Last (9) über einen Ausgang (12, 13) der Peripherieeinheit (3, 4) und über eine Leitung ein Ist-Ausgangsstrom ($I_{ist}$) zuführbar ist, **dadurch gekennzeichnet, dass** die Peripherieeinheit (4,5) mit Mitteln versehen ist, welche den Ist-Ausgangsstrom ($I_{ist}$) erfassen und den Ist-Ausgangsstrom ($I_{ist}$) mit dem Soll-Ausgangsstrom ($I_{soll}$) vergleichen und/oder die Änderungsgeschwindigkeit des Ist-Ausgangsstroms ($I_{ist}$) erfassen und mit der Änderungsgeschwindigkeit des Soll-Ausgangsstroms ($I_{soll}$) vergleichen, wobei die Mittel eine Störung des Ausgangs (12, 13) der Peripherieeinheit dem einen Steuerrechner für den Fall anzeigen, dass

   - für ein vorgebbares Zeitintervall ($\tau$) die Differenz zwischen dem Ist-Ausgangsstrom ($I_{ist}$) und dem Soll-Ausgangsstrom ($I_{soll}$) größer ist als ein vorgebbarer Grenzwert (Gw1) und/oder
   - die Änderungsgeschwindigkeit des Ist-Ausgangsstroms ($I_{ist}$) im Wesentlichen nicht zeitgleich ist mit der Änderungsgeschwindigkeit des Soll-Ausgangsstroms ($I_{soll}$)

2. Peripherieeinheit nach Anspruch 1, **dadurch gekennzeichnet, dass** die Mittel zum Erfassen des Ist-Ausgangsstromes mit einer Stromspiegelschaltung versehen sind.

3. Redundantes Steuersystem mit einem ersten und einem zweiten Steuerrechner, wobei jeder Steuerrechner (1, 2) mit einer Peripherieeinheit (4, 5) nach Anspruch 1 oder 2 versehen ist und die Peripherieeinheiten über einen gemeinsamen Verbindungspunkt an eine induktive Last (9) anschließbar sind.

**Claims**

1. Peripheral unit for a redundant control system, which features a first and a second control processor (1, 2), with control data which represents a setpoint output current ($I_{soll}$) for controlling an inductive load able to be supplied to the peripheral unit (4, 5) by one of the control processors (1, 2), with an actual output current ($I_{ist}$) able to be supplied by the peripheral unit (4, 5) to the inductive load (9) via an output (12, 13) of the peripheral unit (3, 4) and via a line, **characterized in that** the peripheral unit (4, 5) is provided with means which detect the actual output current ($I_{ist}$) and compare the actual output current ($I_{ist}$) with the setpoint output current ($I_{soll}$) and/or detect the speed of change of the actual output current ($I_{ist}$) and compare it with the speed of change of the setpoint output current ($I_{soll}$), with the means indicating to the one control processor a fault of the output (12, 13) of the peripheral unit for the case in which

   - for a predeterminable time interval (r) the difference between the actual output current ($I_{ist}$) and the setpoint output current ($I_{soll}$) is greater than a predeterminable limit value (Gw1) and/or
   - the speed of change of the actual output current ($I_{ist}$) is essentially not synchronous with the speed of change of the setpoint output current ($I_{soll}$).

2. Peripheral unit according to claim 1, **characterized in that** the means for detecting the actual output current is provided with a current mirror circuit.

3. Redundant control system with a first and a second control processor, with each control processor (1, 2) being provided with a peripheral unit (4, 5) according to claim 1 or 2, and the peripheral units being able to be connected via a common connection point to an inductive load (9).

## Revendications

1. Unité périphérique pour un système de commande redondant qui comporte un premier et un deuxième ordinateur de commande (1, 2),
des données de commande qui représentent un courant de sortie de consigne ($I_{soll}$) pour la commande d'une charge inductive pouvant être envoyées à l'unité périphérique (4, 5) par l'un des ordinateurs de commande (1, 2),
un courant de sortie réel ($I_{ist}$) pouvant être envoyé par l'unité périphérique (4, 5) à la charge inductive (9) par l'intermédiaire d'une sortie (12, 13) de l'unité périphérique (3, 4) et par l'intermédiaire d'une ligne, **caractérisée par le fait que** l'unité périphérique (4, 5) est munie de moyens qui détectent le courant de sortie réel ($I_{ist}$) et qui comparent le courant de sortie réel ($I_{ist}$) au courant de sortie de consigne ($I_{soll}$) et/ou qui détectent la vitesse de variation du courant de sortie réel ($I_{ist}$) et qui la comparent à la vitesse de variation du courant de sortie de consigne ($I_{soll}$), les moyens signalant une perturbation de la sortie (12, 13) de l'unité périphérique à un ordinateur de commande si

    - pour un intervalle de temps ($\tau$) pouvant être prédéterminé, la différence entre le courant de sortie réel ($I_{ist}$) et le courant de sortie de consigne ($I_{soll}$) est supérieure à une valeur limite (Gw1) pouvant être prescrite et/ou
    - la vitesse de variation du courant de sortie réel ($I_{ist}$) est globalement non isochrone à la vitesse de variation du courant de sortie de consigne ($I_{soll}$).

2. Unité périphérique selon la revendication 1, **caractérisée par le fait que** les moyens pour la détection du courant de sortie réel sont munis d'un circuit miroir de courant.

3. Système de commande redondant comportant un premier et un deuxième ordinateur de commande, chaque ordinateur de commande (1, 2) étant muni d'une unité périphérique (4, 5) selon la revendication 1 ou 2 et les unités périphériques étant raccordables à une charge inductive (9) par l'intermédiaire d'un point de liaison commun.

FIG 1

FIG 3

FIG 2